# EUROPÄISCHE PATENTSCHRIFT

(11) **EP 2 552 085 B1**
(45) Veröffentlichungstag und Bekanntmachung des Hinweises auf die Patenterteilung: **09.08.2017**
(21) Anmeldenummer: 12004470.6
(22) Anmeldetag: 13.06.2012
(51) Int. Cl.: H04M 1/02, H02G 3/08

(54) **Montagesystem einer Station, insbesondere Türstation, eines Haus-Kommunikationssystems**
Assembly system of a station, in particular door station, of a building communication system
Système de montage d'une station, notamment d'une station de porte, d'un système de communication domestique

(30) Priorität: 27.07.2011 DE 102011108925
(43) Veröffentlichungstag der Anmeldung: 30.01.2013
(73) Patentinhaber: ABB AG, 68309 Mannheim (DE)
(72) Erfinder: Wiese, Michael, 42897 Remscheid (DE); Schrage, Ortwin, 47906 Kempen (DE)

(56) Entgegenhaltungen:
- WO-A1-2005/029820
- WO-A1-2005/029830
- DE-A1- 2 921 485
- DE-C1- 19 614 066

## Beschreibung

Die Erfindung betrifft ein Montagesystem einer Station, insbesondere Türstation, eines Haus-Kommunikationssystems.

Aus der EP 1 843 558 A2 ist ein Verschlussmechanismus für ein Gehäuse (Sprechstation) einer Hauskommunikationsanlage bekannt, bestehend aus einem ortsfest zu installierenden, dosenartigen Aufnahmegehäuse und einem in das Aufnahmegehäuse einzusetzenden und über Haltemittel lösbar zu befestigenden Geräteeinsatz mit einer vorderen Deckplatte. Die Haltemittel sind als formschlüssig fügbare Rastverbindungen ausgebildet, die in einer zu der Deckplatte im Wesentlichen senkrechten Richtung gesehen derart verstellbar und in unterschiedlichen Einstellpositionen fixierbar sind, dass der Geräteeinsatz mit der Deckplatte bezüglich seiner eingesetzten und befestigten Einbaustellung relativ zu dem Aufnahmegehäuse in der zu der Deckplatte im Wesentlichen senkrechten Richtung ausrichtbar ist. Das Aufnahmegehäuse weist zur Erleichterung der Montage in seinem unteren Bereich zwei seitliche, hebelartige, ausklappbare Montagehalter auf, die an jeweils einer der Seitenwände um eine Achse schwenkbar befestigt sind. In der Montagelage sind die Innenseite der Deckplatte und der Aufnahmeraum des Aufnahmegehäuses frei zugänglich, was die Installation, beispielsweise eine Verdrahtung, wesentlich vereinfacht. Nach der Installation (Verdrahtung) wird die Deckplatte aus Aufnahmeschlitzen der Montagehalter herausgezogen, wonach die Montagehalter eingeklappt werden.

Der Erfindung liegt die Aufgabe zu Grunde, ein optimiertes Montagesystem einer Station, insbesondere Türstation, eines Haus-Kommunikationssystems anzugeben.

Diese Aufgabe wird erfindungsgemäß gelöst durch ein Montagesystem einer Station, insbesondere Türstation, eines Haus-Kommunikationssystems,
- wobei ein Geräteeinsatz der Station eine Montageplatte aufweist, an deren Bodenseite zwei Haltelaschen vorgesehen sind, die jeweils einen Führungsarm mit definierter Höhe und Breite respektive Materialstärke besitzen,
- wobei eine Unterputz-Dose oder ein Aufputz-Gehäuseunterteil der Station einen Montagerahmen mit Abwinkelungen an seiner Unterseite besitzt, welche Führungskulissen zum Eingriff der Führungsarme bilden,
- wobei diese Führungskulissen einführseitig derartig mit Anschlägen versehen sind, dass verengte Einführöffnungen der Führungskulissen zum Einführen der Führungsarme gebildet werden,
- wobei die Höhe der Führungskulissen des Montagerahmens größer ist als die Höhe und die Breite der Führungsarme,
- wobei die Höhe der Einführöffnungen der Führungskulissen größer ist als die Breite, jedoch kleiner als die Höhe der Führungsarme,
- wobei die Beweglichkeit der Führungskulissen bei aufgeklappter Position des Geräteeinsatzes durch die verengten Einführöffnungen begrenzt ist,
- wobei die Beweglichkeit der Führungsarme bei im Wesentlichen eingeklappter Position des Geräteeinsatzes durch die Anschläge der Einführöffnungen begrenzt ist,
- wobei die Führungsarme bei Anheben des Geräteeinsatzes bei im Wesentlichen eingeklappter Position durch die Einführungsöffnungen entnehmbar sind.

Zweckmäßig sind im oberen Endabschnitt des Geräteeinsatzes Federbolzen angeordnet, welche federnd in Aufnahmen im oberen Endabschnitt des Montagerahmens einrasten. Auf diese Weise wird ein Anheben des Geräteeinsatzes nach oben ermöglicht.

Dabei weist der Montagerahmen auf seiner Oberseite vorzugsweise eine Abwinkelung auf, welche die Aufnahmen für die Federbolzen aufweist und mit einer Einführschräge für die Montage der Federbolzen versehen ist. Auf diese Weise wird die Montage des Geräteeinsatzes erleichtert.

Die mit der Erfindung erzielbaren Vorteile bestehen insbesondere darin, dass der Geräteeinsatz einerseits gegen Herausfallen aus dem Montagerahmen gesichert ist, andererseits dabei jedoch zwei unterschiedliche Service-Positionen ermöglicht werden:
- Eine erste Service-Position, bei welcher ein Aufschwenken des Geräteeinsatzes um 90° gegenüber dem Montagerahmen mit den Führungsarmen als "Drehpunkte" erfolgt, um auf diese Weise eine für die vorzunehmende Elektroinstallation, d. h. den Anschluss von elektrischen Leitungen an Anschlussklemmen des Geräteeinsatzes (Verdrahtung), sowie für vorzunehmende Einstellungen der Station gut geeignete Position mit guter Zugänglichkeit von elektrischen Anschlussklemmen und Einstell-Einrichtungen an der Rückseite des Geräteeinsatzes sowie im Innenraum der Unterputz-Dose / des Gehäuseunterteils zu schaffen.
- Eine zweite Service-Position, bei welcher die Führungsarme der Haltelaschen durch die Federkraft der Federbolzen gegen die Abwinkelung des Montagerahmens gepresst werden, wobei die seitliche Beweglichkeit der Haltelaschen eingeschränkt wird, indem die Führungsarme durch die Anschläge begrenzt werden, so dass der Geräteeinsatz einerseits am unteren Endabschnitt zwar einen definierten Abstand vom Montagerahmen aufweisen, andererseits aber nicht herausfallen kann. Diese gebildete Position ist insbesondere geeignet, einen Beschriftungsträger in das Tastenmodul einzuschieben oder z. B. für eine Beschriftung (mit dem Namen des Wohnungseigentümers oder Mieters) zu entnehmen.

Die Erfindung wird nachstehend an Hand der in der Zeichnung dargestellten Ausführungsbeispiele erläutert. Es zeigen:
- Fig. 1: Einzelheiten eines Montagesystems einer Station, insbesondere Türstation, eines Haus-Kommunikationssystems
- Fig. 2: einen vormontierter Geräteeinsatz und einen Montagerahmen einer Station, insbesondere Türstation, mit Kennzeichnung der in Fig. 1 gezeigten Details A und B,
- Fig. 3: einen ersten Schritt beim Einbau eines Geräteeinsatzes,
- Fig. 4: ein Detail C zur Anordnung gemäß Fig. 3,
- Fig. 5: einen zweiten Schritt beim Einbau eines Geräteeinsatzes,
- Fig. 6: ein Detail D zur Anordnung gemäß Fig. 5,
- Fig. 7: einen dritten Schritt beim Einbau eines Geräteeinsatzes,
- Fig. 8: ein Detail E zur Anordnung gemäß Fig. 7,
- Fig. 9: einen vierten Schritt beim Einbau eines Geräteeinsatzes,
- Fig. 10: einen fünften Schritt beim Einbau eines Geräteeinsatzes,
- Fig. 11: ein Detail F zur Anordnung gemäß Fig. 10,
- Fig. 12: einen sechsten Schritt beim Einbau eines Geräteeinsatzes,
- Fig. 13: einen siebten Schritt beim Einbau eines Geräteeinsatzes,
- Fig. 14: ein Detail G zur Anordnung gemäß Fig. 13,
- Fig. 15: einen ersten Schritt beim Ausbau eines Geräteeinsatzes,
- Fig. 16: einen zweiten Schritt beim Ausbau eines Geräteeinsatzes,
- Fig. 17: ein Detail H zur Anordnung gemäß Fig. 16,
- Fig. 18: einen dritten Schritt beim Ausbau eines Geräteeinsatzes
- Fig. 19: ein Detail I zur Anordnung gemäß Fig. 18,
- Fig. 20: einen vierten Schritt beim Ausbau eines Geräteeinsatzes,
- Fig. 21: ein Detail J zur Anordnung gemäß Fig. 20,
- Fig. 22: einen vormontierten Geräteeinsatz mit seinen Baukomponenten,
- Fig. 23: eine Station, insbesondere Türstation, bei Montage in einer UnterputzDose,
- Fig. 24: eine Station, insbesondere Türstation, bei Montage in einem Aufputz- Gehäuseunterteil.

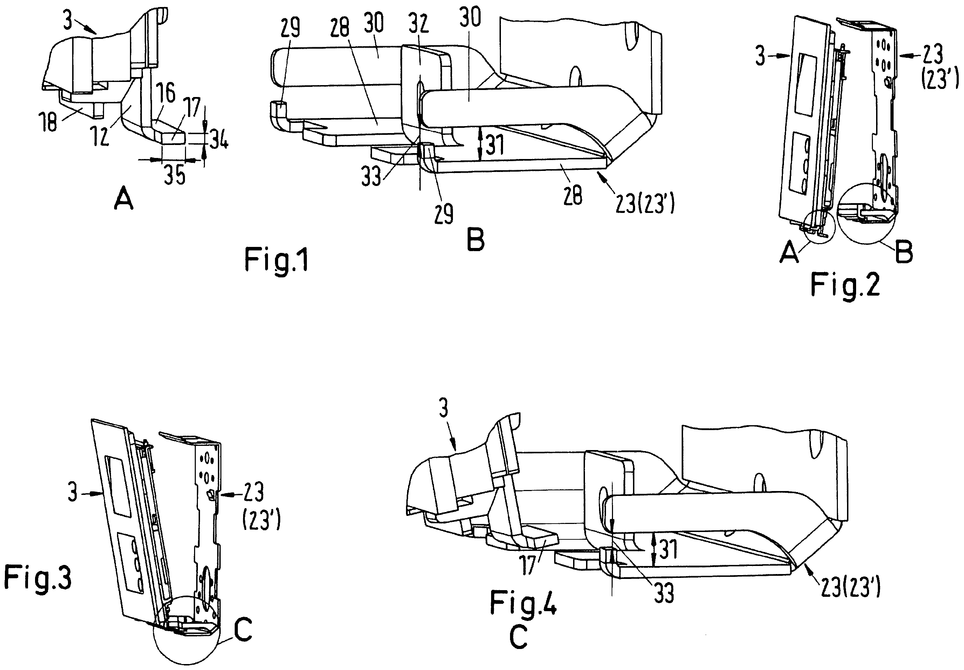

In Fig. 1 sind Einzelheiten eines Montagesystems einer Station, insbesondere Türstation, eines Haus-Kommunikationssystems dargestellt. Dabei wird zunächst auf Fig. 2 hingewiesen, welche einen in einer Unterputz-Dose oder einem Aufputz- Gehäuseunterteil installierten Montagerahmen 23 (23 für Unterputz, 23' für Aufputz) zeigt, in welchen ein vormontierter Geräteeinsatz 3 einer Station 1, insbesondere Türstation, zu montieren ist, wobei im unteren Endabschnitt des Geräteeinsatzes 3 ein Detail A und im unteren Endabschnitt des Montagerahmens 23, 23' ein Detail B gekennzeichnet sind. Beide Details A und B sind in Fig. 1 erläutert. Dabei ist zu beachten, dass bei den Figuren 1 - 22 eine Darstellung interessierender Sachverhalte zur verbesserten Übersicht jeweils ohne eine Unterputz-Dose oder ein Aufputz-Gehäuseunterteil erfolgt.

Detail A der Figur 1 zeigt den unteren Endabschnitt des Geräteeinsatzes 3 mit einer Montageplatte 12, an deren Bodenseite zwei Haltelaschen 16 und ein zwischen diesen beiden Haltelaschen 16 (in Figur 1 ist nur eine Haltelasche 16 zu erkennen) angeordnetes mittleres Befestigungsblech 18 vorgesehen sind. Jede Haltelasche 16 besitzt einen zum Außenraum hin gerichteten Führungsarm 17. Jeder Führungsarm 17 weist eine Höhe 35 und eine Breite (Dicke, Materialstärke) 34 auf.

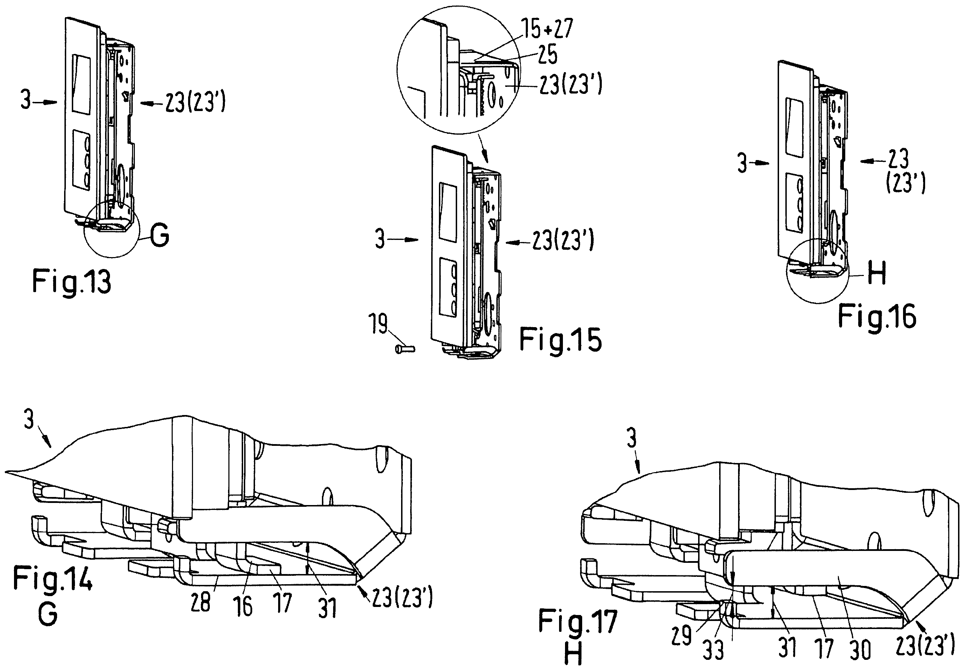

Detail B der Figur 1 zeigt den unteren Endabschnitt des Montagerahmens 23, 23' mit einer Abwinkelung 28 an der Unterseite dieses Montagerahmens 23, 23', wobei Seitenleisten 30 parallel zur Abwinkelung 28 verlaufen, so dass Führungskulissen 31 zwischen Abwinkelung 28 und den Seitenleisten 30 gebildet werden. Diese Führungskulissen 31 dienen zum Eingriff der Führungsarme 17 der Haltelaschen 16. Zwischen beiden an den Außenkanten angeordneten Seitenleisten 30 ist ein mittleres Befestigungsblech 32 mit Gewindebohrung (geeignet zum Einschrauben der Schraube 19) angeordnet. Endseitig ist die Abwinkelung 28 an ihren Eckkanten mit Anschlägen 29 versehen. Durch den Abstand zwischen den Anschlägen 29 und den Unterkanten der Seitenleisten 30 werden verengte Einführöffnungen 33 der Führungskulissen 31 gebildet, welche unten einen Anschlag für die Führungsarme 17 bilden. Für den nachfolgend unter den Figuren 3 - 14 beschriebenen Einbau des Geräteinsatzes 3 in den Montagerahmen 23, 23' sowie den nachfolgend unter den Figuren 15 - 21 beschriebenen Ausbau des Geräteeinsatzes 3 aus dem Montagerahmen 23, 23' sind folgende Eigenschaften von Wichtigkeit:
- die Höhe der Führungskulissen 31 des Montagerahmens 23, 23' ist größer als die Höhe 35 und die Breite 34 der Führungsarme 17;
- die Höhe der Einführöffnungen 33 der Führungskulissen 31 ist größer als die Breite 34, jedoch kleiner als die Höhe 35 der Führungsarme 17.

In Fig. 3 ist ein erster Schritt beim Einbau eines Geräteeinsatzes in den Montagerahmen dargestellt. Ausgehend von der in Figur 2 gezeigten Anordnung wird der untere Endabschnitt des Geräteeinsatzes 3 in Richtung zum unteren Endabschnitt des Montagerahmens 23, 23' geführt - siehe Detail C.

In Fig. 4 ist ein Detail C zur Anordnung gemäß Fig. 3 dargestellt. Der Geräteeinsatz 3 wird derart positioniert, dass die Führungsarme 17 in die unmittelbare Nähe der Einführöffnungen 33 der Führungskulissen 31 des Montagerahmens gelangen.

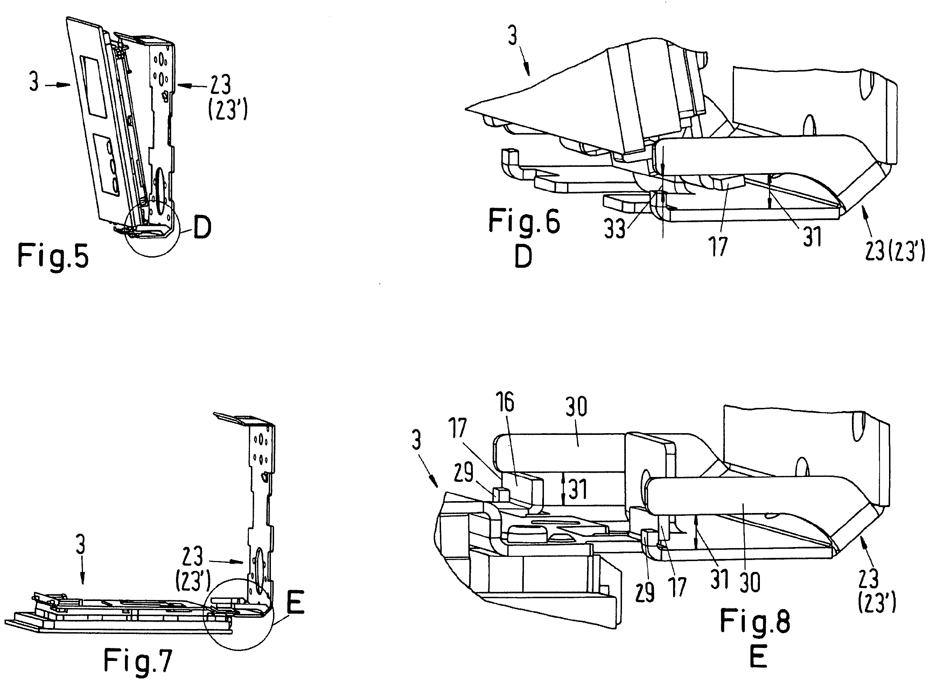

In Fig. 5 ist ein zweiter Schritt beim Einbau eines Geräteeinsatzes dargestellt, bei welchem der untere Endabschnitt des Geräteeinsatzes 3 in Eingriff mit dem unteren Endabschnitt des Montagerahmens 23, 23' gebracht wird - siehe Detail D.

In Fig. 6 ist ein Detail D zur Anordnung gemäß Fig. 5 dargestellt, in welchem das "Einfädeln" der Führungsarme 17 des Geräteeinsatzes 3 durch die Einführöffnungen 33 in die Führungskulissen 31 am unteren Endabschnitt des Montagerahmens 23, 23' gezeigt ist.

In Fig. 7 ist ein dritter Schritt beim Einbau eines Geräteeinsatzes dargestellt, bei welchem ein Aufschwenken des Geräteeinsatzes 3 um 90° gegenüber dem Montagerahmen 23, 23' mit den Führungsarmen 17 als "Drehpunkte" erfolgt, um auf diese Weise eine für die vorzunehmende Elektroinstallation, d. h. den Anschluss von elektrischen Leitungen an Anschlussklemmen des Geräteeinsatzes 3 (Verdrahtung), sowie für vorzunehmende Einstellungen der Station 1, insbesondere Türstation, gut geeignete erste Service-Position mit guter Zugänglichkeit von elektrischen Anschlussklemmen und Einstell-Einrichtungen an der Rückseite des Geräteeinsatzes 3 sowie im Innenraum der Unterputz-Dose / des Gehäuseunterteils zu schaffen - siehe Detail E.

In Fig. 8 ist ein Detail E zur Anordnung gemäß Fig. 7 dargestellt. Die Führungsarme 17 der Haltelaschen 16 des Geräteeinsatzes 3 befinden sich in den mit Hilfe der Seitenleisten 30 gebildeten Führungskulissen 31 des Montagerahmens 23, 23'. Insbesondere drücken die Führungsarme 17 gegen die Anschläge 29, so dass der Geräteeinsatz 3 in aufgeklappter Position gegen Herausfallen aus dem Montagerahmen 23, 23' gesichert ist.

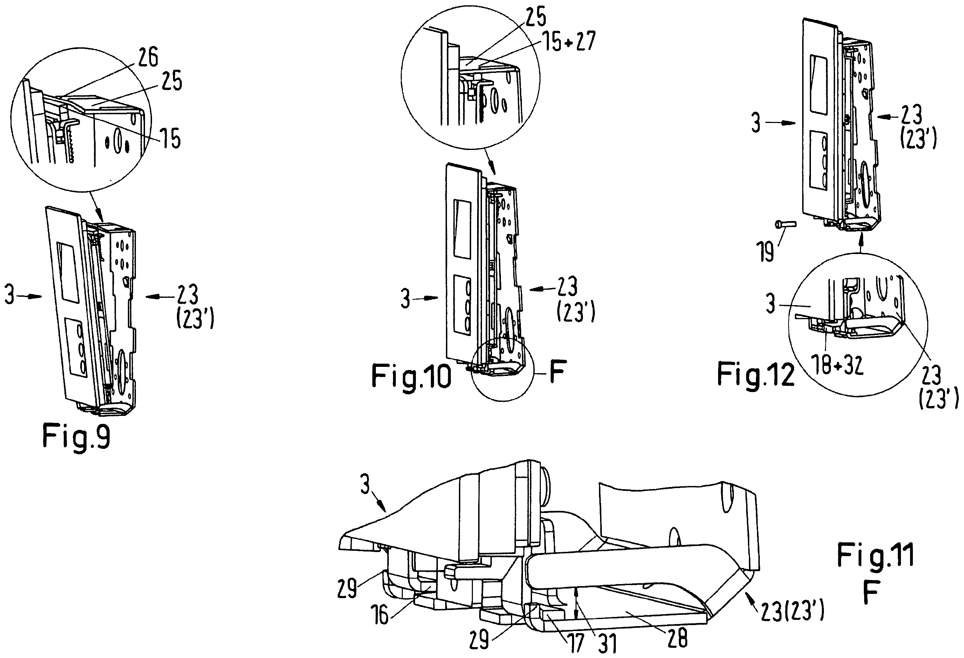

In Fig. 9 ist ein vierter Schritt beim Einbau eines Geräteeinsatzes dargestellt, bei welchem ein Zurückschwenken des Geräteeinsatzes 3 zum Montagerahmen 23, 23' hin nach Abschluss der Elektroinstallation erfolgt. Ein vergrößerter Ausschnitt im oberen Teil der Figur zeigt am oberen Endabschnitt des Geräteeinsatzes 3 angeordnete Federbolzen 15, welche in Eingriff mit einer Einführschräge 26 einer Abwinkelung 25 der Oberseite des Montagerahmens 23, 23' stehen. Bei Druckausübung auf den oberen Endabschnitt des Geräteträgers 3 gleiten die Federbolzen 15 entlang dieser Einführschräge 26 der Abwinkelung 25 und federn dabei ein.

In Fig. 10 ist ein fünfter Schritt beim Einbau eines Geräteeinsatzes dargestellt, bei welchem nach fortgesetzter Druckausübung auf den oberen Endabschnitt des Geräteträgers 3 ein Einrasten der Federbolzen 15 in Aufnahmen 27 der Abwinkelung 25 im oberen Endabschnitt des Montagerahmens 23, 23' erfolgt - siehe den vergrößerten Ausschnitt im oberen Teil der Figur. Die Montage-Situation in den unteren Endabschnitten von Geräteeinsatz 3 / Montagerahmen 23, 23' - siehe Detail F - ist in Fig. 11 gezeigt.

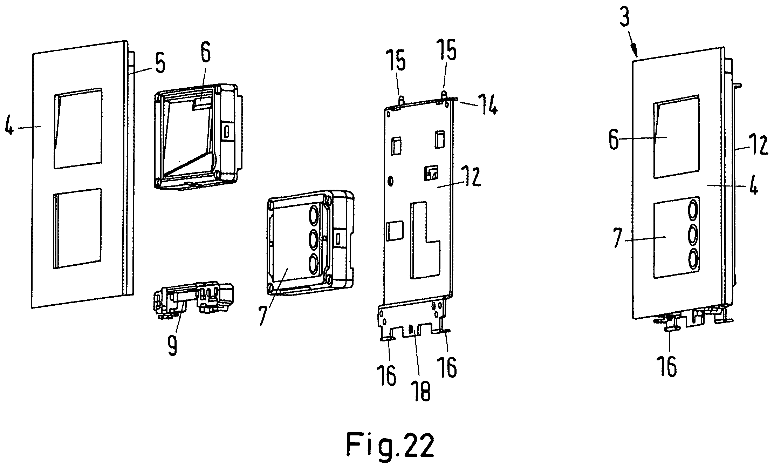

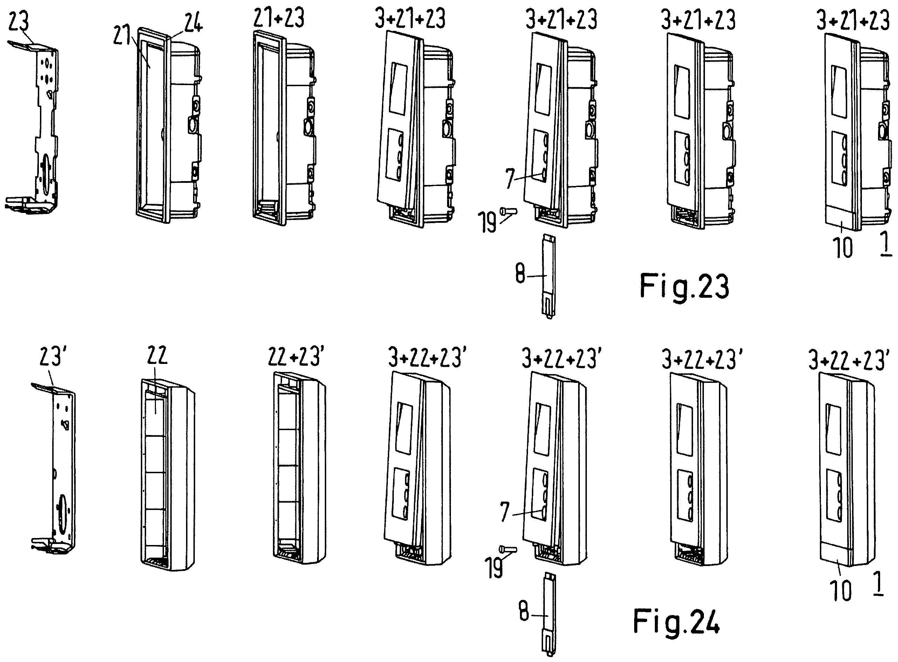

In Fig. 11 ist ein Detail F zur Anordnung gemäß Fig. 10 dargestellt. Die Führungsarme 17 der Haltelaschen 16 werden durch die Federkraft der Federbolzen 15 gegen die Abwinkelung 28 des Montagerahmens 23, 23' gepresst, wobei die seitliche Beweglichkeit der Haltelaschen 16 eingeschränkt wird, indem die Führungsarme 17 durch die Anschläge 29 begrenzt werden, so dass der Geräteeinsatz 3 einerseits am unteren Endabschnitt zwar einen definierten Abstand vom Montagerahmen 23, 23' aufweist, andererseits aber nicht herausfallen kann. Diese gebildete zweite Service-Position ist insbesondere geeignet, einen Beschriftungsträger - siehe Beschriftungsträger 8 in den Figuren 23 und 24 - in das Tastenmodul - siehe Tastenmodul 7 in Figur 22 - einzuschieben oder z. B. für eine Beschriftung (mit dem Namen des Wohnungseigentümers oder Mieters) zu entnehmen.

In Fig. 12 ist ein sechster Schritt beim Einbau eines Geräteeinsatzes dargestellt, bei welchem ein Anschrauben an den unteren Endabschnitten von Geräteeinsatz 3 / Montagerahmen 23, 23' erfolgt. Hierzu greift eine Schraube 19 durch eine Bohrung des mittleren Befestigungsblechs 18 des Geräteeinsatzes 3 in die Gewindebohrung des mittleren Befestigungsblechs 32 des Montagerahmens 23, 23' - siehe den vergrößerten Ausschnitt im unteren Teil der Figur.

In Fig. 13 ist ein siebter Schritt beim Einbau eines Geräteeinsatzes dargestellt, welcher quasi den eingebauten Zustand zeigt, bei dem der Geräteinsatz 3 parallel bezüglich des Montagerahmens 23, 23' positioniert ist, was durch entsprechend vollständiges Einschrauben der Schraube 19 erzielt wird, bis das Befestigungsblech 18 des Geräteeinsatzes 3 das Befestigungsblech 32 des Montagerahmens 23, 23' berührt - siehe Detail G.

Fig. 14 ist ein Detail G zur Anordnung gemäß Fig. 13 dargestellt. Die Führungsarme 17 der Haltelaschen 16 werden durch die Federkraft der Federbolzen 15 gegen die Abwinkelung 28 des Montagerahmens 23, 23' gepresst und befinden sich ungefähr in der Mitte der Führungskulissen 31. Abschließend wird eine Abschlussleiste 10 auf die unteren Endabschnitte von Geräteinsatz 3 / Montagerahmen 23, 23' aufgesteckt, wodurch alle Baukomponenten des Montagesystems abgedeckt sind - siehe hierzu die jeweils letzte Figur bei Fig. 23 oder Fig. 24 mit der Abschlussleiste 10.

In Fig. 15 ist ein erster Schritt beim Ausbau eines Geräteeinsatzes aus dem Montagerahmen dargestellt. Nach Lösen der Abschlussleiste 10 erfolgt zunächst das Lösen der Schraube 19, während der Federbolzen 15 nach wie vor in die Aufnahme 27 der Abwinkelung 25 des Montagerahmens 23, 23' eingreift - siehe den vergrößerten Ausschnitt im oberen Teil der Figur.

In Fig. 16 ist ein zweiter Schritt beim Ausbau eines Geräteeinsatzes dargestellt, bei welchem ein Anheben / Hochschieben des Geräteeinsatzes 3 gegenüber dem Montagerahmen 23, 23' erfolgt - siehe Detail H.

In Fig. 17 ist ein Detail H zur Anordnung gemäß Fig. 16 dargestellt. Zum Herausnehmen aus dem Montagerahmen 23, 23' ist der Geräteeinsatz 3 so weit nach oben anzuheben, bis die Führungsarme 17 über die Anschläge 29 greifen können. Das Anheben des Geräteeinsatzes 3 wird dadurch begrenzt, dass die Führungsarme 17 gegen die Unterkanten der Seitenleisten 30 stoßen. In einem nachfolgenden Schritt ist es nun möglich, die Führungsarme 17 längs der Führungskulissen 31 aus den Einführöffnungen 33 zu führen.

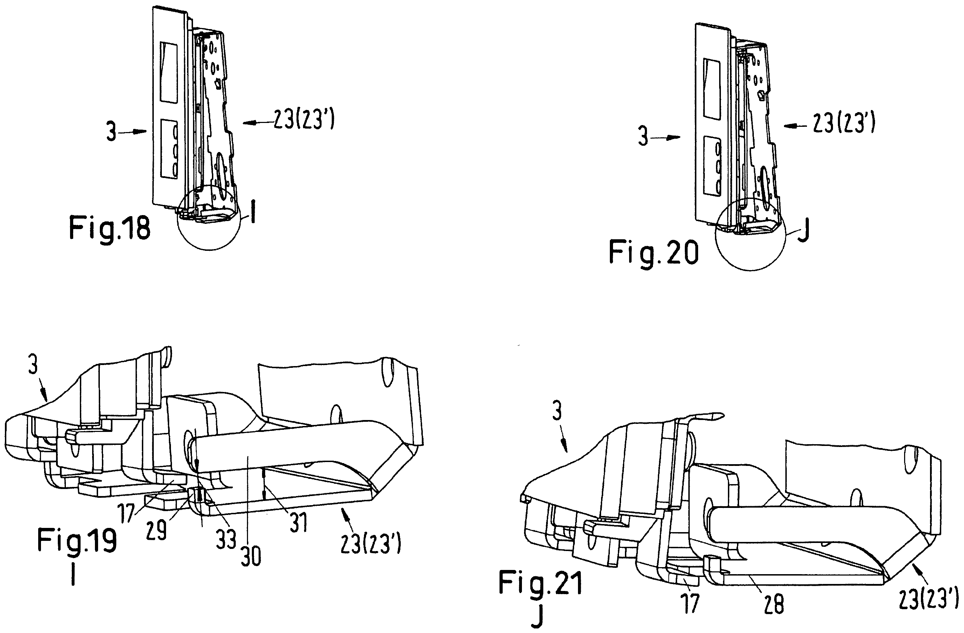

In Fig. 18 ist ein dritter Schritt beim Ausbau eines Geräteeinsatzes dargestellt, bei welchem ein Ausschwenken des unteren Endabschnittes des Geräteeinsatzes 3 gegenüber dem Montagerahmen 23, 23' erfolgt, so dass der untere Endabschnitt des Geräteeinsatzes 3 nachfolgend aus dem Montagerahmen 23, 23' herausgenommen werden kann - siehe Detail I.

In Fig. 19 ist ein Detail I zur Anordnung gemäß Fig. 18 dargestellt. Die Führungsarme 17 sind bereits durch die Einführöffnungen 33 geführt worden und befinden sich außerhalb der Führungskulissen 31, so dass nun eine freie Beweglichkeit der unteren Endabschnitte von Geräteeinsatz 3 / Montagerahmen 23, 23' gegeben ist.

In Fig. 20 ist ein vierter Schritt beim Ausbau eines Geräteeinsatzes dargestellt, bei welchem ein Absenken des Geräteeinsatzes 3 gegenüber dem Montagerahmen 23, 23' nach unten erfolgt, um an den oberen Endabschnitte von Geräteeinsatz 3 / Montagerahmen 23, 23' das Lösen der Verrastung zu ermöglichen, d. h. das Lösen der Federbolzen 15 aus den Aufnahmen 27. Die Montage-Situation an den unteren Endabschnitten von Geräteeinsatz 3 / Montagerahmen 23, 23' ist in Detail J gezeigt.

In Fig. 21 ist ein Detail J zur Anordnung gemäß Fig. 20 dargestellt, welches zeigt, dass sich die Führungsarme 17 des Geräteeinsatzes 3 unterhalb der Höhe der Abwinkelung 28 an der Unterseite des Montagerahmens 23, 23' befinden.

In Fig. 22 ist ein vormontierter Geräteeinsatz mit seinen Baukomponenten dargestellt. Dabei ist der modulare Aufbau des Geräteeinsatzes 3 gut zu erkennen - mit Haupt-Frontplatte 4, Montageplatte 12, Audiomodul 6 (mit Mikrofon, Lautsprecher und Verstärker) Tastenmodul 7 (mit Klingelknöpfen und Namensschildern) und Schließmodul 9. Die Fixierung der einzelnen Module 6, 7, 9 an der Montageplatte 12 erfolgt vorzugsweise durch Schraubverbindungen. Die für das vorgeschlagene Montagesystem wichtigen Bauteile der Montageplatte
- Abwinkelung 14 an der Oberseite der Montageplatte 12 mit den beiden an der Abwinkelung 14 befestigten Federbolzen 15 sowie
- Haltelaschen 16 und mittleres Befestigungsblech 18 (mit Bohrung zur Durchführung der Schraube 19) an der Bodenseite der Montageplatte 12 sind gut zu erkennen. Eine am rückseitigen Rand der Haupt-Frontplatte 4 vorgesehene Dichtung 5 dient der Abdichtung des Geräteeinsatzes 3 gegenüber einer Unterputz-Dose 21 - siehe Figur 23 - oder gegenüber einem Aufputz- Gehäuseunterteil 22 - siehe Figur 24.

In Fig. 23 ist eine Station, insbesondere Türstation, bei Montage in einer Unterputz-Dose dargestellt. Bei der Unterputz-Ausführungsform kommt der Montagerahmen 23 zum Einsatz und wird in der entsprechenden Dose - Unterputz-Dose 21 oder Aufputz- Gehäuseunterteil 22 - befestigt. Die Unterputz-Dose 21 weist einen umlaufende Kragen 24 auf, welcher nach Installation der Unterputz-Dose 21 in der Wand sichtbar ist. Die beiden mittleren Darstellungen Geräteeinsatz 3 + Unterputz-Dose 21 + Montagerahmen 23 bezeichnen die vorstehend unter den Figuren 10 und 11 behandelten zweiten Service-Positionen, bei welchen der Beschriftungsträger 8 aus dem Tastenmodul 7 entnommen bzw. in das Tastenmodul 7 eingeschoben werden kann. Bei der rechten Darstellung ist der untere Endabschnitt des Geräteeinsatzes 3 respektive der Station 1, insbesondere Türstation, mit einer Abschlussleiste 10 abdeckt. Die Montagerahmen für die Unterputz-Ausführung und die Aufputz-Ausführung unterscheiden sich in der Höhe, gleich ist der Geräteeinsatz 3.

In Fig. 24 ist eine Station, insbesondere Türstation, bei Montage in einem Aufputz-Gehäuseunterteil dargestellt. Die beiden mittleren Darstellungen Geräteeinsatz 3 + Aufputz-Gehäuseunterteil 22 + Montagerahmen 23' bezeichnen die vorstehend unter den Figuren 10 und 11 behandelten zweiten Service-Positionen, bei welchen der Beschriftungsträger 8 aus dem Tastenmodul 7 entnommen bzw. in das Tastenmodul 7 eingeschoben werden kann. Bei der rechten Darstellung ist der untere Endabschnitt des Geräteeinsatzes 3 respektive der Station 1, insbesondere Türstation, wiederum mit einer Abschlussleiste 10 abdeckt.

### Bezugszeichenliste

- 1: Station, insbesondere Türstation, eines Haus-Kommunikationssystems
- 2: -
- 3: Geräteeinsatz, vormontiert
- 4: Haupt-Frontplatte
- 5: Dichtung
- 6: Audiomodul mit Mikrofon, Lautsprecher, Verstärker
- 7: Tastenmodul mit Klingelknöpfen, Namensschildern
- 8: Beschriftungsträger
- 9: Schließmodul
- 10: Abschlussleiste
- 11: -
- 12: Montageplatte
- 13: -
- 14: Abwinkelung an der Oberseite der Montageplatte 12
- 15: Federbolzen, an Abwinkelung 14 befestigt
- 16: Haltelaschen an der Bodenseite der Montageplatte 12
- 17: Führungsarme der Haltelaschen 16
- 18: mittleres Befestigungsblech mit Bohrung zum Durchführen der Schraube 19
- 19: Schraube
- 20: -
- 21: Unterputz-Dose
- 22: Aufputz-Gehäuseunterteil
- 23: 23'Montagerahmen
- 24: umlaufender Kragen
- 25: Abwinkelung an der Oberseite des Montagerahmens 23, 23'
- 26: Einführschräge der Abwinkelung 25
- 27: Aufnahmen in der Abwinkelung 25 zum Eingriff der Federbolzen 15
- 28: Abwinkelung an der Unterseite des Montagerahmens 23, 23'
- 29: Anschläge an der Abwinkelung 28
- 30: Seitenleisten parallel zur Abwinkelung 28
- 31: Führungskulissen für Führungsarme 17 der Haltelaschen 16
- 32: mittleres Befestigungsblech mit Gewindebohrung zum Einschrauben der Schraube
- 33: Einführöffnungen der Führungskulissen 31
- 34: Breite (Dicke, Materialstärke) eines Führungsarms 17
- 35: Höhe eines Führungsarms 17

## Patentansprüche

1. Montagesystem einer Station (1), insbesondere Türstation, eines Haus-Kommunikationssystems,
• wobei ein Geräteeinsatz (3) der Station (1) eine Montageplatte (12) aufweist, an deren Bodenseite zwei Haltelaschen (16) vorgesehen sind, die jeweils einen Führungsarm (17) besitzen,
• wobei eine Unterputz-Dose (21) oder ein Aufputz-Gehäuseunterteil (22) der Station (1) einen Montagerahmen (23, 23') mit Abwinkelungen (28) an seiner Unterseite besitzt, welche Führungskulissen (31) zum Eingriff der Führungsarme (17) bilden,
• wobei diese Führungskulissen (31) einführseitig mit Anschlägen (29) versehen sind, welche verengte Einführöffnungen (33) der Führungskulissen (31) zum Einführen der Führungsarme (17) bilden,
• wobei die Höhe der Führungskulissen (31) des Montagerahmens (23, 23') größer ist als die Höhe (35) und die Breite (34) der Führungsarme (17),
• wobei die Höhe der Einführöffnungen (33) der Führungskulissen (31) größer ist als die Breite (34), jedoch kleiner als die Höhe (35) der Führungsarme (17),
• wobei die Beweglichkeit der Führungskulissen (31) bei aufgeklappter Position des Geräteeinsatzes (3) durch die verengten Einführöffnungen (33) begrenzt ist,
• wobei die Beweglichkeit der Führungsarme (17) bei eingeklappter Position des Geräteeinsatzes (3) durch die Anschläge (29) der Einführöffnungen (33) begrenzt ist,
• wobei die Führungsarme (17) bei Anheben des Geräteeinsatzes (3) bei eingeklappter Position durch die Einführungsöffnungen (33) entnehmbar sind.

2. Montagesystem (1) nach Anspruch 1, **dadurch gekennzeichnet, dass** im oberen Endabschnitt des Geräteeinsatzes (3) Federbolzen (15) angeordnet sind, welche federnd in Aufnahmen (27) im oberen Endabschnitt des Montagerahmens (23, 23') einrasten.

3. Montagesystem (1) nach Anspruch 2, **dadurch gekennzeichnet, dass** der Montagerahmen (23, 23') auf seiner Oberseite eine Abwinkelung (25) aufweist, welche die Aufnahmen (27) für die Federbolzen (15) aufweist und mit einer Einführschräge (26) für die Montage der Federbolzen (15) versehen ist.

## Claims

1. Mounting system of a station (1), in particular a door station, of a house communication system,
• wherein a device insert (3) of the station (1) comprises a mounting plate (12), the base side of said mounting plate being provided with two retaining brackets (16) that each comprise a guide arm (17),
• wherein an in-wall box (21) or an on-wall casing base part (22) of the station (1) comprises a mounting frame (23,23') having bent areas (28) on its lower side, which bent areas form guide connecting members (31) for engaging with the guide arms (17),
• wherein these guide connecting members (31) are provided on the insertion side with stops (29) which form narrowed insertion orifices (33) of the guide connecting members (31) for inserting the guide arms (17),
• wherein the height of the guide connecting members (31) of the mounting frame (23, 23') is greater than the height (35) and the width (34) of the guide arms (17),
• wherein the height of the insertion orifices (33) of the guide connecting members (31) is greater than the width (34) but less than the height (35) of the guide arms (17),
• wherein the extent to which the guide connecting members (31) can move when the device insert (3) is in the folded-out position is limited by virtue of the narrowed insertion orifices (33),
• wherein the extent to which the guide arms (17) can move when the device insert (3) is in the folded-in position is limited by virtue of the stops (29) of the insertion orifices (33),
• wherein the guide arms (17) can be removed through the insertion orifices (33) upon raising the device insert (3) when in the folded-in position.

2. Mounting system (1) according to Claim 1, **characterized in that** resilient pins (15) are arranged in the upper end section of the device insert (3), which resilient pins latch in a resilient manner in receiving devices (27) in the upper end section of the mounting frame (23, 23').

3. Mounting system (1) according to Claim 2, **characterized in that** the mounting frame (23, 23') comprises on its upper side a bent area (25) that comprises the receiving devices (27) for the resilient pins (15) and is provided with an insertion incline (26) for mounting the resilient pins (15).

## Revendications

1. Système de montage d'un poste (1), en particulier d'un poste de porte, d'un système de communication domestique, dans lequel
une garniture d'appareil (3) du poste (1) présente une plaque de montage (12) sur le côté de base duquel sont prévues deux pattes de maintien (16) qui possèdent chacune un bras de guidage (17),
une boîte encastrable (21) ou une partie inférieure (22) de boîtier apparent du poste (1) possède un bâti de montage (23, 23') doté sur son côté inférieur de rabats (28) qui forment des coulisseaux de guidage (31) qui engagent le bras de guidage (17),
du côté de l'insertion, ces coulisseaux de guidage (31) sont dotés de butées (29) qui forment des ouvertures rétrécies d'insertion (33) des coulisseaux de guidage (31) en vue d'insérer les bras de guidage (17),
la hauteur des coulisseaux de guidage (31) du cadre de montage (23, 23') est supérieure à la hauteur (35) et à la largeur (34) des bras de guidage (17),
la hauteur des ouvertures d'insertion (33) des coulisseaux de guidage (31) est supérieure à la largeur (34) mais inférieure à la hauteur (35) des bras de guidage (17),
lorsque la garniture d'appareil (3) est en position déployée, la mobilité des coulisseaux de guidage (31) est limitée par les ouvertures rétrécies d'insertion (33),
lorsque la garniture d'appareil (3) est en position rétractée, la mobilité des bras de guidage (17) est limitée par les butées (29) des ouvertures d'insertion (33) et
les bras de guidage (17) peuvent être enlevés par les ouvertures d'insertion (33) lorsque la garniture d'appareil (3) en position rétractée est relevée.

2. Système de montage (1) selon la revendication 1, **caractérisé en ce que** des goujons à ressort (15) qui s'engagent élastiquement dans des logements (27) ménagés dans la section d'extrémité supérieure du bâti de montage (23, 23') sont disposés dans la section d'extrémité supérieure de la garniture d'appareil (3).

3. Système de montage (1) selon la revendication 2, **caractérisé en ce que** le bâti de montage (23, 23') présente sur son côté supérieur un rabat (25) qui présente les logements (27) pour les goujons à ressort (15) et est doté d'une rampe d'insertion (26) permettant le montage des goujons à ressort (15).
